# EUROPÄISCHE PATENTSCHRIFT

(11) **EP 1 673 535 B1**
(45) Veröffentlichungstag und Bekanntmachung des Hinweises auf die Patenterteilung: **12.03.2008**
(21) Anmeldenummer: 04817191.2
(22) Anmeldetag: 14.10.2004
(51) Int. Cl.: F03B 17/00, F03B 17/06

(54) **KLEINWASSERKRAFTANLAGE**
WATER POWER PLANT
CENTRALE ELECTRIQUE A FAIBLE FORCE HYDRAULIQUE

(30) Priorität: 18.10.2003 DE 10348533
(43) Veröffentlichungstag der Anmeldung: 28.06.2006
(73) Patentinhaber: Ibes Baugrundinstitut Freiberg GmbH, 09599 Freiberg (DE)
(72) Erfinder: ANDREAS, Rudolph, 01920 Ossling/OT Döbra (DE)
(74) Vertreter: Hofmann, Klaus
(86) Internationale Anmeldenummer: PCT/DE2004/002276
(87) Internationale Veröffentlichungsnummer: WO 2005/038241

(56) Entgegenhaltungen:
- EP-A- 1 085 642
- WO-A-94/20751
- DE-A1- 2 339 108
- DE-A1- 2 406 668
- DE-C- 413 999
- US-A- 4 472 937

## Beschreibung

Die Erfindung betrifft eine Kleinwasserkraftanlage in Form einer Durchflußanlage zur Stromerzeugung, deren Anwendung sich besonders dann anbietet, wenn es darum geht, kleine Energiepotentiale unter konsequenten Einschluß ökologischer Aspekte wirtschaftlich zu nutzen.

Weltweit gibt es zahlreiche Aktivitäten, alternativ zur bisher üblichen Stromerzeugung aus fossilen Energieträgern, Elektroenergie mittels Wind- und Wasserkraftanlagen zu gewinnen.

Einer immer weiteren Verbreitung von großen Wasserkraftanlagen sind -namentlich , wenn sie weitläufige Staustufen bedingen - allerdings ökologische Grenzen gesetzt; gerade unter solchen Aspekten sind ihre Einschnitte in die Natur und ihre diesbezüglichen Auswirkungen vielfach höchst umstritten.

Vor allem in hochindustrialisierten Regionen gewinnen kleine Anlagen zur lokalen Stromerzeugung an Bedeutung. Vorläufer der nachfolgend beschriebenen Wasserkraftanlage haben sich bereits im Rahmen der Anfänge der Industrialisierung und fortfolgend bei der Gewinnung elektrischer Energie für kleine technische Einrichtungen, Fabriken, Dörfer oder dergleichen grundsätzlich bewährt. Das Problem derartiger lokal versorgenden Anlagen war bekanntlich die relativ geringe Leistungsausbeute. Dem gegenüber standen meist hohe Baukosten, die aus der Notwendigkeit resultierten, Staustufen oder Absturzbauwerke zu installieren, um den hierzu notwendigen Wasserdruck für eine nennenswerte Stromerzeugung mit Hilfe von Wasserrädern oder gar Turbinen überhaupt verfügbar zu machen.

Der gegenwärtige Stand der Technik auf dem Gebiet der Kleinwasserkraftanlagen wird von zahlreichen Kleinturbinensystemen bestimmt, die seit langem bekannte Prinzipien modifiziert aufgreifen. So beschreibt DE 41 12 730 C2 eine derartige Vorrichtung zur Erzeugung von elektrischen Strom durch Wasserkraft mit mindestens einem Schaufel- oder Flügelrad. Aus CH 692 392 A5 ist eine Vorrichtung zur Erzeugung von elektrischer Energie aus Wasserkraft, mindestens umfassend eine Turbine und einen Generator, wobei die Anlage als Ganzes, zumindest jedoch Turbine und Generator, in einem handelsüblichen Normcontainer eingebaut ist, bekannt. DE 41 38 601 A1 legt eine Anlage zur Energieerzeugung durch Wasserkraft offen, die über eine Länge von mehreren Hundert Metern z.B. längs einer Schiffahrtsrinne installiert werden kann; sie weist hierfür zwischen zwei Umlenkrollen ein endloses Übertragungsmittel, z.B. eine geschlossene Kette, auf, an der in Wasser eintauchende Behälter angeordnet sind, die sich auf dem Rückweg zur oberen Umlenkrolle auf dem Gewässer schwimmend fortbewegen. Ferner offenbart die EP 1 085 642 eine Einrichtung zur Erzeugung von Strom aus der Energie strömenden Wassers mittels eines Linearsystems.

Neben dem seit langem bekannten Einsatz in natürlichen Fließgewässern gibt es zunehmend Bestrebungen, Energiepotentiale innerhalb von Kunstbauten, etwa in Kläranlagen, zu nutzen. In Kläranlagen liegt der Wasserspiegel aufgrund der geforderten Betriebssicherheit über dem Hochwasserspiegel, so daß sich daher im allgemeinen ein erhebliches hydraulisches Gefälle/Energiepotential zwischen dem Ablauf der Kläranlage und dem Mittelwasserstand im Vorfluter ergibt. Dieses Energiepotential könnte prinzipiell zur Stromerzeugung genutzt werden, jedoch besteht das Problem, daß die Bauformen des Kläranlagenauslaufes für die bislang verfügbaren Kleinwasserkraftanlagen, die mittels Wasserturbine oder Wasserkraftschnecke arbeiten, nahezu unüberwindliche Hindernisse auftürmen.

Besteht - wie vielfach - ein Kläranlagenauslauf aus einer Kombination mehrerer Einzelabstürze, so kann hier eine wirtschaftliche Wasserkraftnutzung durch eine Turbine bzw. Schnecke nur schwer erzielt werden; wird das kinetische Energiepotential überdies in langen Transportstrecken zum Vorfluter abgebaut und die Fließgeschwindigkeit durch Reibungsverluste zu stark vermindert, so ist der Einsatz von Turbinen oder Schnecken gar nicht mehr möglich.

Ist - wie gleichfalls vielfach anzutreffen - im Kläranlagenauslauf ein Schachtabsturz oder eine Sohlrampe vorhanden, so könnten eigentlich sowohl Rohrturbinen oder Standardpumpen im Turbinenbetrieb als auch Durchströmturbinen zum Einsatz kommen. Die Anpassung solcher Kleinwasserkraftanlagen an die schwankenden Durchflüsse in Kläranlagen ist allerdings mit einem hohen - meist zu hohen - technischen Aufwand verbunden, so daß Anlagen, die eine hohe Fließgeschwindigkeit benötigen (z. B. Wasserkraftschnecken gemäß DE 41 39 134 C2 und DE 195 07 149 C2) von vornherein praktisch ausscheiden.

Die genannten Fallbeispiele und Prinzipien bei Kunstbauten - hier eine Kläranlage - sind auf freifließende Gewässer entsprechend übertragbar. Auch hier ist die Nutzung von hintereinander geschalteten kleineren - gegebenenfalls natürlichen - Einzelabstürzen, Wehren und Sohlrampen durch Turbinen oftmals nur durch verhältnismäßig hohen technischen Aufwand möglich.

Mit den derzeit verfügbaren Systemen ist es nicht möglich, kleine Energiepotentiale des fließenden Wassers vorteilhaft zu nutzen, d.h. es gibt insbesondere keine Anlagen, die den zu stellenden wirtschaftlichen und ökologischen Anforderungen gleichermaßen gerecht werden; bei letzterem spielt die sogenannte Fischverträglichkeit, d. h. die uneingeschränkte Wanderung der Fische im Gewässer, zunehmend eine herausragende Rolle.

Ein weiteres Problem der Nutzung von Durchflußpotentialen besteht in den enormen jahreszeitlichen - bei Kunstbauten oftmals tageszeitlichen - Schwankungen der nutzbaren Wassermengen. Viele der Maßnahmen dagegen sind verbunden mit zusätzlichen neuen Kosten und mit weiteren Aufwendungen zum Schutz der Flora und Fauna, etwa dem Errichten von Fischtreppen, die letztlich häufig die Sinnfälligkeit des Einsatzes der derzeit verfügbaren Anlagen in Frage stellen.

Ausgehend von dieser Problematik ist es das Ziel der Erfindung, eine Kleinwasserkraftanlage zu entwickeln, die die bisherigen Grenzen überwindet und erstmalig in der Lage ist, vorhandene Durchflußpotentiale ohne aufwendige und ökologisch problematische Staustufen zu nutzen. Die Erfindung soll insbesondere die Nutzung von bisher ungenutzten, vergleichsweise geringen und stark schwankenden Durchflußpotentialen ermöglichen, wobei die Energierückgewinnung in Kunstbauten, die von Wasser durchflossen werden, etwa Kläranlagen, Wasseraufbereitungsanlagen oder dergleichen, ausdrücklich eingeschlossen ist.

Diese Aufgabe wird erfindungsgemäß durch die kennzeichnenden Merkmale des Hauptanspruches gelöst. Weitere vorteilhafte Ausführungen ergeben sich aus den nachfolgenden Ansprüchen.

Der Erfindung liegt der Gedanke zugrunde, ohne bislang übliche Staustufen, die lineare Bewegung von Gewässern mittels eines Lineargenerators in elektrische Energie umzuwandeln. Hierzu besteht die erfindungsgemäße Anlage aus einem oder mehreren in Fließrichtung des Gewässers paarweise angeordneten Linearsystemen. Ein derartiges System besteht aus einer langgestreckten, zwischen einer Einlaß- und einer Auslaßstelle angeordneten Kammer, in der ein Trog linear beweglich ist. An der Einlaßstelle wird der Trog gefüllt; die Wasserkraft bewirkt dessen lineare Bewegung zur Auslaßstelle, wo seine Entleerung erfolgt. Im weiteren bewirkt ein Rückholsystem eine gegengleiche Bewegung des Troges im benachbart angeordneten Linearsystem.

Erfindungsgemäß erfolgt die Umwandlung der linearen Bewegung des Troges in elektrische Energie mittels zweier Lineargeneratoren pro Linearsystem. Der Stator eines Lineargenerators ist längsseits der Kammer so angeordnet, daß er sich über den gesamten Verfahrweg des Troges erstreckt. Der Läufer ist mit dem Trog verbunden und greift in den Stator ein. Die direkte Umsetzung der linearen Bewegung der Tröge mittels des Lineargeneratorprinzips sichert einen ausreichend hohen Wirkungsgrad der Anlage. Kommt das erfindungsgemäße System bei Anlagen, die ein größeres Gefälle, ein Absturzbauwerk oder eine Sohlrampe aufweisen, zur Anwendung, dient das Linearsystem gleichzeitig als Fischtreppe.

Beim Einsatz der Kleinwasserkraftanlage im Bereich von Wehranlagen, bei Auslaufbauwerken von Kläranlagen oder dergleichen ist vorgesehen, die Anlage mit einem Neigungssystem und/oder einer Höhenregulierung auszustatten. Die Anlage ist damit an die wechselnde Energiepotentiale bzw. Einlaufwasserstände anpaßbar, so beispielsweise in einer Kläranlage an den Mittelwasserstand im Vorfluter.

In einer bevorzugten Ausführungsform besteht die Anlage aus zwei Paaren von Linearsystemen, wobei hi er die Bewegungspunkte der Tröge um ein Viertel des Verfahrweges versetzt sind. Zur Vermeidung von Totpunkten sind in einer Verallgemeinerung bei n-Paaren von Linearsystemen die Bewegungspunkte der 2n Tröge um den 1/n-ten Teil des Verfahrweges versetzt angeordnet. Bei mehreren Paaren von Linearsystemen nutzen in einer bevorzugten Ausführungsform die benachbart liegenden Systeme einen gemeinsamen Lineargenerator-Stator.

Bei einem erhöhten Gefälle kann das erfindungsgemäße Linearsystem so mit hinlänglich bekannten Rotationssystemen, etwa einer Wasserkraftschnecke, kombiniert werden, daß das Rotationssystem der Abdeckung der Grundlast und das Linearsystem der Abdeckung der geforderten Spitzenlast dient.

Bei optimierter Auslegung erreicht die vorgeschlagene Anlage einen Gesamtwirkungsgrad von 70%, wobei die Energieausbeute von kleinen Potentialen bis hin zu dem eines Gefälles von nur 0,5 bis 1 % möglich ist. Auf Grund ihres unkomplizierten Aufbaus kann sie den o. g. Prämissen entsprechend ohne weiteres an dezentralen Standorten betrieben werden. Gleichfalls kann die Kleinwasserkraftanlage im Bereich der Energierückgewinnung, z.B. in Kläranlagen, Wasseraufbereitungsanlagen, Wasserhaltungsanlagen im Bergbau, zur Belüftung von Tagebaurestseen oder dergleichen, vorteilhaft eingesetzt werden.

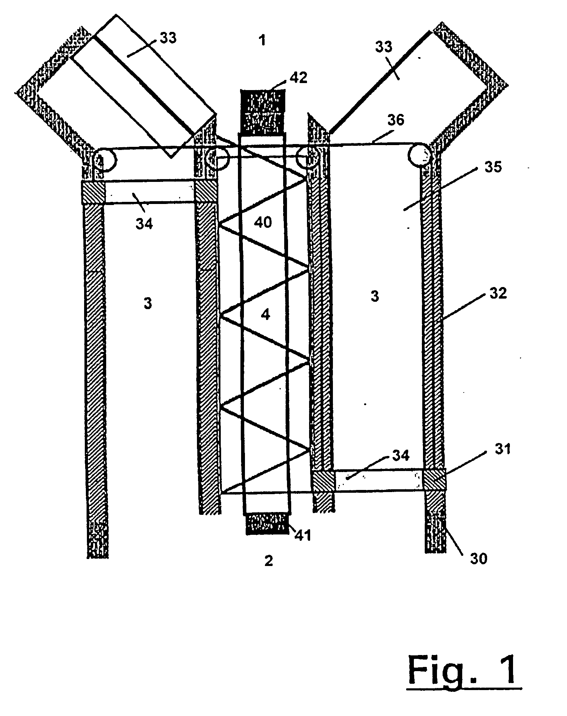

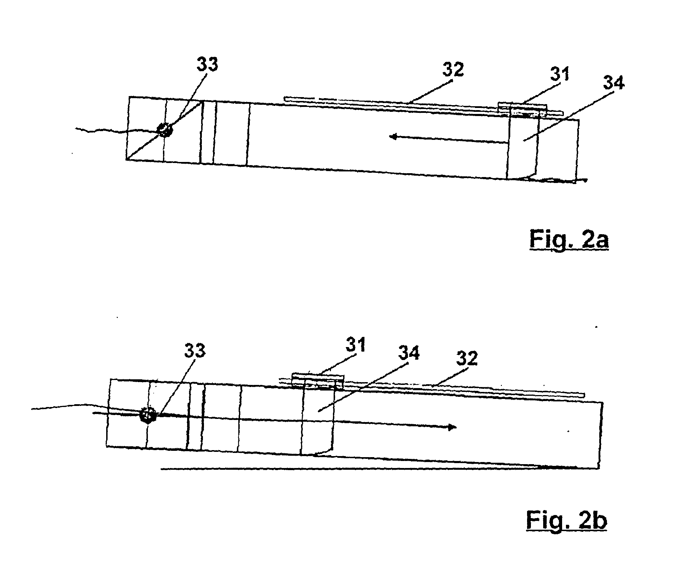

Der Aufbau und die Funktionsweise der erfindungsgemäßen Anlage wird nachfolgend anhand eines Ausführungsbeispieles erläutert. Hierzu zeigen Fig. 1 in einer schematischen Darstellung die vorgeschlagene Kleinwasserkraftanlage in einer Draufsicht und die Fig. 2a und 2b in einer Seitenansicht die Funktionsweise des Linearsystems.

Die Kleinwasserkraftanlage nach Fig. 1 besteht aus zwei einzelnen Linearsystemenkomponenten 3, links und rechts. Das Gesamtsystem ist über eine (nicht gezeigte) Aufnahmevorrichtung fest mit dem Gewässeruntergrund verbunden.

Jede Systemkomponente 3 setzt sich aus einer langgestreckten, zwischen einer Einlaß- 1 und einer Auslaßstelle 2 angeordneten Kammer 35, in der ein Trog 34 linear beweglich ist, zusammen. An der Einlaßstelle 1 ist zunächst die linke Einlauflappe 33 des entsprechenden Linearsystems 3 geöffnet - damit fließt das Wasser in den Trog 34 der linken Kammer 35 ein, der durch die Kraft des Wassers zur Auslaßstelle 1 bewegt wird. In dem Maß wie sich der linke Trog 34 zur Auslaßstelle 2 bewegt, wird der rechte Trog 34 vom Rückholsystem 36 in einer gegengleichen Bewegung zur Einlaßstelle 1 gezogen. In der jeweiligen Endstellung der Tröge 34 wechseln die Klappen, d.h. die linke Einlaufklappe 33 schließt und die rechte Klappe 33 öffnet. Damit wird der nun gefüllte, rechte Trog 34 nach unten zur Auslaßstelle 2 und der linke leere Trog 34 nach oben zur Einlaßstelle 1 gezogen.

Diese Linearbewegungen der Tröge 34 wird nach dem Lineargeneratorprinzip, direkt mittels zweier Lineargeneratoren 30 pro Linearsystem - mit Läufer 31 und Stator 32 - in elektrische Energie umgewandelt. Der Stator 32 ist hier in die Bewandung der Kammer integriert und verläuft über den gesamten Verfahrweg des Troges 34. Die jeweiligen Läufer 31 sind seitlich an der Aufhängevorrichtung des Troges 34 angebracht und greifen in die entsprechenden Statoren 32 ein. Spaltverluste im Linearsystem 3 werden mit Dichtbürsten, Abstreifern und ähnlichen einfachen Mitteln nahezu vermieden. Das Rückholsystem 36 besteht aus einem System von Rückholseilen, deren Kraftwirkung durch einen von der Anlage gespeisten elektrischen Hilfsantrieb erfolgt. Ein vergleichsweise großes Kammervolumen des Troges 34 garantiert die Funktion auch bei Schwachlast. Im Fall des Wassermangels werden beide Einlaufklappen 33 geschlossen und das Linearsystem 3 stillgelegt. Das Linearsystem 3 dient gleichzeitig als Fischtreppe; die Anlage benötigt somit keine zusätzlichen Einrichtungen wie Fischschleusen oder dergleichen. Die Tröge 34 können aus Beton, Edelstahl, Kunststoff oder einer Kombination mehrerer Grundkomponenten bestehen.

Es ist vorteilhaft möglich diese Anlage mit einem Rotationssystem 4, das eine Wasserkraftschnecke 40, deren Lager 41 und einen Rotationsgenerator 42 umfaßt, zu kombinieren. Bereits eine geringe Fließgeschwindigkeit des Gewässers versetzt die Wasserkraftschnecke 40 in eine Rotationsbewegung, die somit zur Stromerzeugung über den Rotationsgenerator 42 genutzt wird. Die Wasserkraftschnecke 40 hat einen vergleichsweise höheren Wirkungsgrad als Wasserräder und erreicht die Werte kleiner Turbinen. Sie benötigt keine Regelung und paßt sich selbstregelnd der vorgegebenen Netzfrequenz an. Die Wasserkraftschnecke 40 ist hier mit einem Betontrog in die Sohlrampen integriert.

Die Anlage ist mit einer Höhenverstellung und Neigungsregulierung - ohne Abbildung - ausgestattet. Speziell im Fall des Einsatzes der Kleinwasserkraftanlage im Bereich von Wehranlagen, bei Auslaufbauwerken von Kläranlagen oder dergleichen wird die Anlage durch diese Hilfsaggregate an die wechselnden Bedingungen der Einlaufwasserstände mit geringem Aufwand sicher.

Schließlich zeigen die Fig. 2a und 2b in einer Detaildarstellung (Seitenansicht) die Anordnung und Funktionsweise des Linearsystems 3. In Fig. 2a ist die Einlaufklappe 33 geschlossen und der leere Trog 34 befindet sich in einer Aufwärtsbewegung zur Einlaßstelle 1. Fig. 2b zeigt die gegengleiche Bewegung des vollen Troges 34 in Richtung der Auslaßstelle 2.

Mittels zweier Lineargeneratoren 30 pro Linearsystem 3 wird die lineare Bewegung des Troges 34 und der damit verbundenen Läufer 31 ohne eine weitere Bewegungstransformation in elektrische Energie umgewandelt.

Die in den Zeichnungen verwendeten Bezugszeichen:
- 1: Einlaßstelle
- 2: Auslaßstelle
- 3: Linearsystem; umfassend:
- 30: Lineargenerator
- 31: Lineargenerator - Läufer
- 32: Lineargenerator - Stator
- 33: Einlaufklappe
- 34: Trog
- 35: Kammer
- 36: Rückholsystem
- 4: Rotationssystem; umfassend:
- 40: Wasserkraftschnecke
- 41: Lager der Wasserkraftschnecke
- 42: Rotationsgenerator

## Patentansprüche

1. Kleinwasserkraftanlage in Form einer Durchflußanlage zur Stromerzeugung, **dadurch gekennzeichnet, daß** die Anlage aus einem oder mehreren in Fließrichtung des Gewässers paarweise angeordneten Linearsystemen (3) besteht, die jeweils eine langgestreckte, zwischen einer Einlaß- (1) und einer Auslaßstelle (2), angeordnete Kammer (35) aufweist, in der ein Trog (34) linear beweglich ist, der an der Einlaßstelle (1) mit Wasser befüllt und - durch die Wasserkraft linear bewegt - an der Auslaßstelle (2) entleert wird, wobei ein Rückholsystem (36) eine gegengleiche Bewegung des Troges (34) der benachbart angeordneten Linearsysteme (3) bewirkt, und zur Umwandlung der linearen Bewegung des Troges (34) in elektrische Energie zwei Lineargeneratoren (30) pro Linearsystem (3) derart vorgesehen sind, daß jeweils ein Stator (32) des Lineargenerators (30) den gesamten Verfahrweg des Troges (34) umfassend entlang der Längsseite der Kammer (35) angeordnet ist, und der Generator (30) einen mit dem Trog (34) verbundenen Läufer (31) aufweist, der in den Stator (32) eingreift, und daß die Anlage ein Neigungssystem und/oder eine Höhenregulierung aufweist.

2. Kleinwasserkraftanlage nach Anspruch 1, **dadurch gekennzeichnet, daß** sie aus n-Paaren von Linearsystemen (3) besteht, wobei das Rückholsystem (36) derart gestaltet ist, daß die Bewegungspunkte der Tröge (34) um den 1 /n-ten Teil des Verfahrweges versetzt sind.

3. Kleinwasserkraftanlage nach Anspruch 1 oder 2, **dadurch gekennzeichnet, daß** das Rückholsystem (36) der Tröge (34) durch einen Seilzug im Pendelbetrieb oder einen Federmechanismus oder durch einen elektrischen Hilfsantrieb erfolgt.

4. Kleinwasserkraftanlage nach Anspruch 1 bis 3, **dadurch gekennzeichnet, daß** sie aus mindestens zwei Linearsystemen (3) besteht, wobei die benachbart angeordneten Linearsysteme (3) einen gemeinsamen Stator (32) aufweisen.

## Claims

1. Miniature hydroelectric power station in the form of a continuous-flow installation for electricity generation, **characterized in that** the power station comprises one or more linear systems (3) which are arranged in pairs in the flow direction of the waterway and each have an elongated chamber (35) which is arranged between an inlet point (1) and an outlet point (2), and in which a trough (34) can move linearly, which is filled with water at the inlet point (1) and - moved linearly by the power of the water - is emptied at the outlet point (2), with the trough (34) of the linear systems (3) which are arranged adjacent being moved in an equal and opposite manner by a return system (36), and with two linear generators (30) being provided for each linear system (3) in order to convert the linear movement of the trough (34) to electrical power, **in that** a stator (32) of the linear generator (30) is in each case arranged along the longitudinal side of the chamber (35) covering the entire movement distance of the trough (34), and the generator (30) has a rotor (31), which is connected to the trough (34) and engages in the stator (32), and **in that** the installation has an inclination system and/or height regulation.

2. Miniature hydroelectric power station according to Claim 1, **characterized in that** the power station comprises n-pairs of linear systems (3) with the return system (36) being designed such that the movement points of the troughs (34) are offset by a fraction of 1/n of the movement distance.

3. Miniature hydroelectric power station according to Claim 1 or 2, **characterized in that** the return system (36) for the troughs (34) is provided by a cable operated in an oscillatory form, or by a spring mechanism or by an electrical auxiliary drive.

4. Miniature hydroelectric power station according to Claims 1 to 3, **characterized in that** the power station comprises at least two linear systems (3), with the linear systems (3) which are arranged adjacent having a common stator (32).

## Revendications

1. Petite installation de force motrice hydraulique qui présente la forme d'une installation de production de courant électrique par écoulement d'eau, **caractérisée en ce que** l'installation est constituée d'un ou de plusieurs systèmes de linéaires (3) disposés par paire dans la direction d'écoulement du cours d'eau et qui présentent tous une chambre allongée (35) disposée entre un emplacement d'entrée (1) et un emplacement de sortie (2) et dans laquelle un godet (34) peut être déplacé linéairement en étant rempli d'eau à l'emplacement d'entrée (1), déplacé linéairement par la force hydraulique et vidé à l'emplacement de sortie (2), un système de renvoi (36) ayant pour effet des déplacements en sens opposés des godet (34) de systèmes linéaires (3) voisins, deux générateurs linéaires (30) étant prévus pour chaque système linéaire (3) pour convertir le déplacement linéaire du godet (34) en énergie électrique en disposant un stator (32) du générateur linéaire (30) qui occupe la totalité du parcours de déplacement du godet (34) le long du long côté de la chambre (35), le générateur (30) présentant un induit (31) qui s'engage dans le stator (32) et l'installation présentant un système d'inclinaison et/ou une régulation de hauteur.

2. Petite installation de force motrice hydraulique selon la revendication 1, **caractérisée en ce qu'**elle est constituée de n paires de systèmes linéaires (3), le système de renvoi (36) étant configuré de telle sorte que les points de déplacement des godets (34) sont décalés de la 1/n partie du parcours de déplacement.

3. Petite installation de force motrice hydraulique selon les revendications 1 ou 2, **caractérisée en ce que** le système de renvoi (36) des godets (34) est un câble de traction fonctionnant en pendule, un mécanisme élastique ou un entraînement électrique auxiliaire.

4. Petite installation de force motrice hydraulique selon les revendications 1 à 3, **caractérisée en ce qu'**elle est constituée d'au moins deux systèmes linéaires (3), les systèmes linéaires (3) voisins présentant un stator (32) commun.
